# EUROPEAN PATENT SPECIFICATION

(11) **EP 1 789 249 B1**
(45) Date of publication and mention of the grant of the patent: **27.02.2008**
(21) Application number: 05778739.2
(22) Date of filing: 10.08.2005
(51) Int. Cl.: B29C 55/06, B32B 3/14, B32B 37/12, B29C 65/00

(54) **THIN FILM MADE OF EXTENSIBLE PLASTIC MATERIAL FOR PACKAGING, REINFORCED AND AT LEAST PARTIALLY STRETCHED, HAVING HIGH MECHANICAL STRENGTH**
AUS DEHNBAREM KUNSTSTOFFMATERIAL HERGESTELLTE VERSTÄRKTE UND ZUMINDEST TEILWEISE GESTRECKTE DÜNNE FOLIE MIT HOHER MECHANISCHER FESTIGKEIT
FILM MINCE FABRIQUE EN MATIERE PLASTIQUE EXTENSIBLE POUR EMBALLAGE, RENFORCE ET AU MOINS PARTIELLEMENT ETIRE, POSSEDANT UNE HAUTE RESISTANCE MECANIQUE

(30) Priority: 12.08.2004 IT RM20040412
(43) Date of publication of application: 30.05.2007
(73) Proprietor: AKRO-FLEX S.a.s. di Garegnani Antonio & C., 20080 Vermezzo (MI) (IT)
(72) Inventor: GAREGNANI, Antonio, I-20080 Vermezzo (MI) (IT)
(74) Representative: Sarpi, Maurizio
(86) International application number: PCT/IT2005/000489
(87) International publication number: WO 2006/016393

(56) References cited:
- EP-A- 0 834 397
- EP-A- 1 095 759
- WO-A-01/60709
- WO-A-02/094674
- US-A- 5 565 222

## Description

The present invention relates to packaging films.

A lot of packaging films made of extensible plastic material are known today. They can be extensible completely and stretched partially or until a zero residual stretch.

It is also known that the tensile strength increases as the stretching applied to the film rises, under the same thickness of the film.

In this product line the term "stretched film" usually indicates an extensible film which has been subjected to a more or less strong stretching but still has a residual stretch so that it can be further stretched.

The expression "zero residual stretch film" is usually used to indicate a film that has been completely stretched so that it cannot undergo further stretching.

A first problem of the presently known stretched films is that they can easily be torn usually from the side edges to the centre of the film upon packaging of goods.

Stretch films with improved resistance to tearing are disclosed in EP-A-1095759, US-A-5565222, WO-A-0160709 and WO-A-02094674.

A second problem of the presently marketed stretched films is that the unavoidable reduction in the width of the stretched film with respect to its original width because of the stretching produces film bobbins having a lower width than the standard bobbins for packaging film (for example 50 cm). To this end, it should be appreciated that many packaging machines do not allow films with a lower width than the standard one to be used or in any case they should be suitably modified to accept one and only one specific width.

The main object of the present invention is to overcome the above-mentioned problems by providing an extensible packaging film reinforced by longitudinal side strips made of the same material as the film which is subjected at least to a partial stretching, which longitudinal strips projects laterally from the edges of the film, thus increasing its width reduced by stretching.

This object has been accomplished according to the invention by coupling an extensible packaging film to two reinforcing longitudinal strips of the same material disposed along the side edges of the film so as to overlap such edges only partially, and by applying the same longitudinal stretching to the film and the reinforcing longitudinal strips before winding the film about the reels.

A better understanding of the invention will result from the following detailed description with reference to the accompanying drawings that show a preferred embodiments thereof only by way of a not limiting example.

In the drawings:

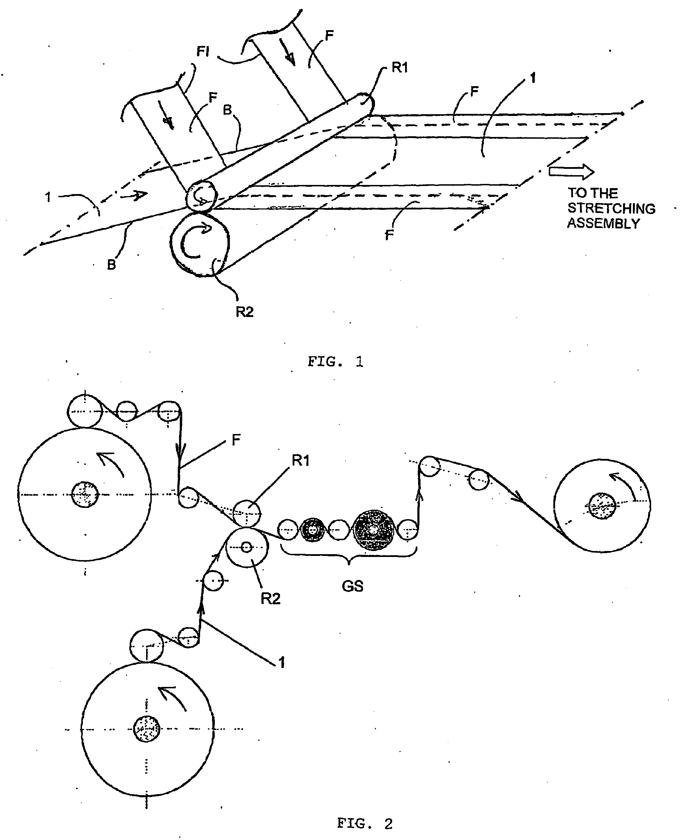

Figure 1 is a diagram showing the coupling of the film to the longitudinal reinforcing strips; and
Figure 2 is an exemplary diagram of the arrangement of the coupling rollers and the stretching assembly of a film manufacturing machine.

With reference to the figures mentioned above the extensible packaging film disclosed is stretched at least partially and is provided with longitudinal reinforcing strips made of the same material which overlap partially the side edges of the film to bring the total width of the film to the size of 50 cm or any other desired width.

According to the invention, the central extensible film 1 is first coupled to the longitudinal reinforcing strips F and then stretched together with the strips before being re-wound about a storage reel.

In the embodiment illustrated schematically in the figures the coupling is carried out by a pair of coupling or pressure rollers R1 and R2, and the stretching is accomplished by a "stretching assembly" GS of the known type.

From the foregoing it is self-evident that the transversal dimension of the reinforced film, i.e. its final width, depends on the stretching intensity to which the film is subjected as well as the starting width, the width of the longitudinal side strips and the overlapping amount of such strips F on film 1.

For example, a stretched, reinforced film having the same final width, an equal or lower weight per unit surface, and a much higher mechanical strength can be advantageously obtained from a not stretched film having a standard width of 50 cm.

It should be noted that the increase in the mechanical characteristics allows the thickness of film 1 and side strips F to be strongly reduced and the same mechanical strength to be provided.

Moreover, according to a variation of the present invention (not shown), the mechanical strength of the stretched, reinforced film can be further increased by "edging again" in a known manner the side edges of central film 1 and/or the inner edges of side reinforcing longitudinal strips F before coupling them to one another. In short, further rollers of the known type for edging again edges B of central film 1 and/or inner edges FI of reinforcing strips F, as desired, are arranged upstream of coupling or pressure rollers R1 and R2 to carry out such edging.

To this end, it should be appreciated that according to the invention it is suitable to edge again the outer edges of longitudinal strips F as such edging would provide a storage reel that would not unroll as the elastic memory of the materials which such extensible packaging films are made of would cause the film to tear continuously.

A further variation of the invention (not shown) couples the film so far disclosed to a central longitudinal reinforcing strip or more longitudinal strips spaced apart from one another and the side strips uniformly.

A first advantage of the invention so far disclosed is that a stretched, reinforced film having exactly the same desired width can be obtained by adjusting in a suitable way the width of reinforcing side strips F and the overlapping amount on central film 1.

A second advantage is that the film according to the invention has a weight for unit surface which is essentially the same as the stretched, not reinforced film of the presently marketed type.

A third advantage of the invention is that the film so far disclosed has a mechanical strength as well as a tearing propagation strength which are much greater than the stretched and not stretched films of the prior art: in fact, the longitudinal overlap areas form a real "barrier" to tearing propagation.

The present invention has been described and illustrated according to a preferred embodiment thereof, however, it is self-evident that those skilled in the art can make technically equivalent modifications and/or replacements without departing from the scope of the present industrial invention.

## Claims

1. A film made of extensible packaging material, **characterized in that** it is provided with longitudinal, reinforcing, side strips (F) which partially overlap the edges of film (1) to increase its width, the thus reinforced film being subjected at least to a partial stretching.

2. The film according to the preceding claim, **characterized in that** it is coupled to said longitudinal reinforcing strips (F) by a pair of coupling or pressure rollers (R1 and R2), and the next stretching of film (1) and side strips (F) is accomplished by a "stretching assembly" (GS) of the known type so that the transversal dimension of the reinforced film, i.e. its final width, depends on the stretching intensity to which the film is subjected as well as the starting width, the width of the longitudinal side strips and the overlapping amount of such strips (F) on film (1).

3. The film according to the preceding claim, **characterized in that** it has the same final width as starting film (1) to which side strips (F) have been coupled, an equal or lower weight per unit surface, and a much higher mechanical strength, the increase in the mechanical characteristics because of stretching allowing the thickness of film (1) and side strips (F) to be strongly reduced and the same mechanical strength to be achieved.

4. The film according to any preceding claim, **characterized in that** its side edges (B) and/or inner edges (FI) of longitudinal reinforcing strips (F) coupled thereto are edged again, thus providing that in each overlap area between film (1) and reinforcing strips (F) is obtained at least a longitudinal border or bead that further increases mechanical and tearing strengths.

5. The film according to any preceding claim, **characterized in that** it has a mechanical strength as well as a tearing propagation strength which are much greater than the stretched and not stretched films of the prior art as the longitudinal overlap areas form a real "barrier" to tearing propagation.

6. The film according to any preceding claim, **characterized in that** it includes a further central longitudinal reinforcing strip or more longitudinal strips spaced apart from one another and said side reinforcing strips (F) uniformly.

7. A method of manufacturing a film according to the preceding claims, **characterized by** the following steps:
- coupling an extensible packaging film (1) to two longitudinal reinforcing strips (F) of the same material which are arranged along the side edges of film (1)so as to overlap only partially the same, and
- applying the same longitudinal stretching to film (1) and longitudinal reinforcing strips (F) before winding the film about the reels.

## Patentansprüche

1. Aus dehnbarem Verpackungsmaterial hergestellte Folie, **dadurch gekennzeichnet, dass** sie mit längsverlaufenden, verstärkenden Seitenstreifen (F) ausgestattet ist, die die Ränder der Folie (1) teilweise überlappen, um ihre Breite zu vergrößern, wobei die so verstärkte Folie mindestens einer teilweisen Streckung unterzogen wird.

2. Folie nach dem vorausgehenden Anspruch, **dadurch gekennzeichnet, dass** sie mit den längsverlaufenden, verstärkenden Streifen (F) durch ein Paar Verbindungs- oder Druckrollen (R1 und R2) verbunden ist und das nächste Strecken der Folie (1) und der Seitenstreifen (F) mittels einer "Streckeinheit" (GS) der bekannten Gattung so durchgeführt wird, dass die Querabmessung der verstärkten Folie, d.h. ihre endgültige Breite, von der Streckintensität, der die Folie unterzogen wird, sowie von der Ausgangsbreite, der Breite der längsverlaufenden Seitenstreifen und der Größe der Überlappung dieser Streifen (F) an der Folie (1) abhängt.

3. Folie nach dem vorausgehenden Anspruch, **dadurch gekennzeichnet, dass** sie die gleiche endgültige Breite wie die Ausgangsfolie (1), mit der die Seitenstreifen (F) verbunden worden sind, ein gleiches oder geringeres Gewicht je Flächeneinheit und eine viel höhere mechanische Festigkeit aufweist, wobei die Erhöhung der mechanischen Eigenschaften wegen des Streckens gestattet, dass die Dicke der Folie (1) und der Seitenstreifen (F) stark herabgesetzt ist und die gleiche mechanische Festigkeit erreicht wird.

4. Folie nach einem vorausgehenden Anspruch, **dadurch gekennzeichnet, dass** ihre Seitenränder (B) und/oder die inneren Ränder (FI) der längsverlaufenden, verstärkenden Streifen (F), die damit verbunden sind, wiederum mit Rändern ausgebildet sind, wodurch erreicht ist, dass in jedem Überlappungsbereich zwischen der Folie (1) und den verstärkenden Streifen (F) mindestens eine längsverlaufende Borte oder ein längsverlaufender Wulst erreicht ist, die bzw. der die mechanische Festigkeit und Rissfestigkeit weiter erhöht.

5. Folie nach einem vorausgehenden Anspruch, **dadurch gekennzeichnet, dass** sie eine mechanische Festigkeit sowie eine Rissausbreitungsfestigkeit aufweist, die viel größer sind als die der gestreckten und nicht-gestreckten Folien des Standes der Technik, da die längsverlaufenden Überlappungsbereiche eine echte "Sperre" gegen eine Rissausbreitung bilden.

6. Folie nach einem vorausgehenden Anspruch, **dadurch gekennzeichnet, dass** sie einen weiteren, zentralen, längsverlaufenden, verstärkenden Streifen oder mehrere längsverlaufende Streifen aufweist, die voneinander und von den verstärkenden Seitenstreifen (F) gleichmäßig beabstandet sind.

7. Verfahren zur Herstellung einer Folie nach einem der vorausgehenden Ansprüche, **gekennzeichnet durch** die folgenden Schritte:
- Verbinden einer dehnbarem Verpackungsfolie (1) mit zwei längsverlaufenden, verstärkenden Streifen (F) aus gleichem Material, die entlang der Seitenränder der Folie (1) so angeordnet werden, dass sie diese nur teilweise überlappen, und
- Einwirkenlassen dergleichen längsverlaufenden Streckung auf die Folie (1) und die längsverlaufenden, verstärkenden Streifen (F), bevor den Folie auf Spulen aufgewickelt wird.

## Revendications

1. Film composé de matière d'emballage extensible, **caractérisé en ce qu'**il comprend des bandes latérales de renfort longitudinales (F) chevauchant partiellement les bords du film (1) pour augmenter sa largeur, le film ainsi renforcé étant soumis au moins à un étirement partiel.

2. Film selon la revendication précédente, **caractérisé en ce qu'**il est couplé auxdites bandes de renfort longitudinales (F) par une paire de rouleaux de couplage ou de pression (R1 et R2), et l'étirement successif du film (1) et des bandes latérales (F) est réalisé par un "ensemble d'étirement" (GS) du type connu de telle sorte que la dimension transversale du film renforcé, c'est-à-dire sa largeur finale, dépend de l'intensité de l'étirement auquel le film est soumis ainsi que de la largeur de départ, la largeur des bandes latérales longitudinales et la quantité de chevauchement de ces bandes (F) sur le film (1).

3. Film selon la revendication précédente, **caractérisé en ce qu'**il a la même largeur finale que le film de départ (1) auquel les bandes latérales (F) ont été couplées, un poids inférieur ou égal par unité de surface, et une résistance mécanique beaucoup plus élevée, l'augmentation des caractéristiques mécaniques due à l'étirement permettant de réduire fortement l'épaisseur du film (1) et des bandes latérale (F), et d'obtenir la même résistance mécanique.

4. Film selon l'une quelconque des revendications précédentes, **caractérisé en ce que** ses bords latéraux (B) et/ou les bords intérieurs (FI) des bandes de renfort longitudinales (F) couplées à ceux-ci sont bordés de nouveau, de telle sorte que dans chaque surface de chevauchement entre le film (1) et les bandes de renfort (F) on obtient au moins un bord ou un bourrelet longitudinal qui augmente encore les résistances mécanique et au cisaillement.

5. Film selon l'une quelconque des revendications précédentes, **caractérisé en ce que** sa résistance mécanique ainsi que sa résistance à la propagation du cisaillement sont très supérieures à celles des films étirés et non étirés de l'art antérieur, étant donné que les surfaces de chevauchement longitudinal forment une "barrière" réelle contre la propagation du cisaillement.

6. Film selon l'une quelconque des revendications précédentes, **caractérisé en ce qu'**il comprend une autre bande de renfort longitudinal centrale ou plusieurs bandes longitudinales espacées l'une de l'autre et lesdites bandes de renfort (F) uniformément.

7. procédé de fabrication d'un film selon les revendications précédentes, **caractérisé par** les étapes suivantes :
◆ couplage d'un film d'emballage extensible (1) à deux bandes de renfort longitudinales (F) de la même matière qui sont agencées le long des bords latéraux du film (1) de façon à chevaucher seulement partiellement celui-ci ; et
◆ application du même étirement longitudinal au film (1) et bandes de renfort longitudinales (F) avant l'enroulement du film autour des bobines.
